# EUROPEAN PATENT APPLICATION

(11) **EP 4 641 737 A1**
(43) Date of publication of application: **29.10.2025**
(21) Application number: 23916632.5
(22) Date of filing: 16.01.2023
(51) Int. Cl.: H01M 10/0569, H01M 10/0567, H01M 10/054

(54) **ELECTROLYTE AND SODIUM METAL BATTERY CONTAINING SAME, AND ELECTROCHEMICAL DEVICE**

(71) Applicant: Contemporary Amperex Technology Co., Limited, Ningde, Fujian 352100 (CN)
(72) Inventor: GUAN, Yingjie, Ningde, Fujian 352100 (CN); ZHAO, Yuzhen, Ningde, Fujian 352100 (CN); QIN, Meng, Ningde, Fujian 352100 (CN); YANG, Huiling, Ningde, Fujian 352100 (CN); WEN, Yan, Ningde, Fujian 352100 (CN); HUANG, Qisen, Ningde, Fujian 352100 (CN)
(74) Representative: Gong, Jinping
(86) International application number: PCT/CN2023/072268
(87) International publication number: WO 2024/152139

(57) **Abstract**

The present invention relates to an electrolyte as well as a sodium metal battery and an electrochemical apparatus containing the same. The electrolyte includes a non-aqueous solvent and a sodium salt; the non-aqueous solvent includes an ether solvent, where the ether solvent includes ethylene glycol dimethyl ether and one or more compounds represented by general formula I: R1-(O-R3)ₙ-O-R2 (general formula I); where R1 and R2 are each independently selected from a C1 to C6 alkyl group, R3 is selected from a C1 to C5 alkylene group, and n is an integer from 2 to 5; or, R1 and R2 are each independently selected from a C2 to C6 alkyl group, R3 is selected from a C1 to C5 alkylene group, and n is 1; and a mass percentage of ethylene glycol dimethyl ether is 5% to 50%. By applying the electrolyte, the cycle performance of the sodium metal battery under low-temperature conditions can be improved.

## Description

### TECHNICAL FIELD

The present invention relates to the field of sodium battery technologies, and more particularly, to an electrolyte as well as a sodium metal battery and an electrochemical apparatus containing the same.

### BACKGROUND

With the development of secondary batteries, sodium metal batteries have attracted significant attention due to their low cost and promising application prospects in large-scale energy storage.

To meet the demands of practical applications, the use of batteries in various scenarios must be considered. In winter or high-altitude cold regions, high performance requirements are imposed on sodium metal batteries under low-temperature conditions. Currently, sodium metal batteries still exhibit poor cycle performance under low-temperature conditions.

### SUMMARY

The present invention is made in view of the above technical problems and is intended to provide an electrolyte with excellent cycle performance under low-temperature conditions as well as a sodium metal battery and an electrochemical apparatus containing the same.

According to a first aspect, the present invention provides an electrolyte, including a non-aqueous solvent and a sodium salt dissolved in the non-aqueous solvent, where the non-aqueous solvent includes an ether solvent, and the ether solvent includes ethylene glycol dimethyl ether and one or more compounds represented by general formula I:

R1-(O-R3)ₙ-O-R2 (general formula I);

where R1 and R2 are each independently selected from a linear or branched alkyl group having 1 to 6 carbon atoms, R3 is selected from a linear or branched alkylene group having 1 to 5 carbon atoms, and n is an integer from 2 to 5; or,
R1 and R2 are each independently selected from a linear or branched alkyl group having 2 to 6 carbon atoms, R3 is selected from a linear or branched alkylene group having 1 to 5 carbon atoms, and n is 1; and
a mass percentage of ethylene glycol dimethyl ether in the non-aqueous solvent is 5% to 50%.

According to the technical solution of the present invention, ethylene glycol dimethyl ether exhibits strong sodium salt dissociation capability under room temperature conditions (approximately 20°C to 35°C), but the sodium salt dissociation capability thereof significantly deteriorates under low-temperature conditions (for example, below approximately 0°C); moreover, crystallization tends to occur under low-temperature conditions. In contrast, the ether compound represented by general formula I maintains a certain sodium salt dissociation capability under low-temperature conditions. The technical solution of the present invention combines ethylene glycol dimethyl ether with the ether compound represented by general formula I to achieve the synergistic effect, preventing crystallization of the electrolyte at low temperatures and maintaining good sodium salt dissociation effects, thereby enabling the sodium metal battery to exhibit superior performance under both room temperature and low-temperature conditions.

Furthermore, according to experimental results, it is found that the mass percentage of ethylene glycol dimethyl ether in a total mass of the non-aqueous solvent must be within the range of 5% to 50%. If the mass percentage of ethylene glycol dimethyl ether is below 5% or above 50%, the low-temperature performance of the sodium metal battery significantly deteriorates.

In some embodiments, a mass ratio of ethylene glycol dimethyl ether to the compound represented by general formula I is (5 to 50):(50 to 95).

When the mass ratio of ethylene glycol dimethyl ether to the compound represented by general formula I is within the above range, the two components can better exert synergistic effect, thereby achieving excellent technical effects. When the above mass ratio is employed, the sodium metal battery can maintain good cycle performance even at temperatures as low as -20°C.

In some embodiments, in general formula I, R1 and R2 are each independently selected from methyl or ethyl, R3 is selected from a linear C1 to C5 alkylene group, and n is an integer from 2 to 5; or,
R1 and R2 are ethyl, R3 is selected from a linear C1 to C5 alkylene group, and n is 1.

In some embodiments, in general formula I, R1 and R2 are each independently selected from a linear or branched alkyl group having 1 to 6 carbon atoms, R3 is -CH₂CH₂-, and n is an integer from 2 to 5; or,
R1 and R2 are each independently selected from a linear or branched alkyl group having 2 to 6 carbon atoms, R3 is -CH₂CH₂-, and n is 1.

In some embodiments, the compound represented by general formula I includes one or a combination of two or more of the following:
R1 and R2 are methyl, R3 is -CH₂CH₂-, and n is selected from 2, 3, 4, or 5 (for example, diethylene glycol dimethyl ether, triethylene glycol dimethyl ether, tetraethylene glycol dimethyl ether, pentaethylene glycol dimethyl ether, or the like); and
R1 and R2 are each independently selected from ethyl, propyl, 1-methylethyl, butyl, 2-methylpropyl, 1-methylpropyl, or 1,1-dimethylethyl, R3 is -CH₂CH₂-, and n is selected from 1, 2, 3, 4, or 5 (for example, ethylene glycol diethyl ether, diethylene glycol diethyl ether, triethylene glycol diethyl ether, tetraethylene glycol diethyl ether, pentaethylene glycol diethyl ether, ethylene glycol dibutyl ether, or the like).

In some embodiments, a plurality of compounds represented by general formula I may be polyethylene glycol dimethyl ether, where a molecular weight of the polyethylene glycol dimethyl ether is 200 to 320.

In some embodiments, the sodium salt includes a first sodium salt, and the first sodium salt is sodium hexafluorophosphate.

In some embodiments, a concentration of sodium hexafluorophosphate in the electrolyte is 0.5 to 1.5 mol/L.

In some embodiments, the sodium salt includes sodium hexafluorophosphate and a second sodium salt, and the second sodium salt includes one or a combination of two or more of the following: sodium bis(fluorosulfonyl)imide (NaFSI), sodium bis(trifluoromethanesulfonyl)imide (NaTFSI), sodium difluoro(oxalato)borate, sodium tetrafluoroborate, sodium borohydride, sodium perchlorate, sodium bis(oxalato)borate, sodium trifluoromethanesulfonate.

According to the technical solution of the present invention, under different temperature conditions, ethylene glycol dimethyl ether and the ether compound represented by general formula I exhibit varying dissociation capabilities for different sodium salts. By simultaneously applying the first sodium salt and the second sodium salt, a better match can be achieved with the dissociation capabilities of ethylene glycol dimethyl ether and the ether compound represented by general formula I, enabling the electrolyte to exhibit excellent sodium salt dissociation effects under both room temperature and low-temperature conditions, thereby maintaining good conductivity and further improving the low-temperature performance of the battery.

In some embodiments, a concentration of the second sodium salt in the electrolyte is 0.05 to 0.8 mol/L.

In some embodiments, the electrolyte consists of the non-aqueous solvent and the sodium salt dissolved in the non-aqueous solvent.

In some embodiments, the non-aqueous solvent is an organic solvent.

In some embodiments, the non-aqueous solvent is the ether solvent.

In some embodiments, the ether solvent consists of ethylene glycol dimethyl ether and the ether compound represented by general formula I.

In some embodiments, the non-aqueous solvent further includes one or a combination of two or more of the following: a carboxylic acid ester solvent, a carbonate solvent, a sulfate ester solvent, a nitrile solvent, and a ketone solvent. For example, the non-aqueous solvent further includes one or a combination of two or more of the following: ethylene carbonate (EC), propylene carbonate (PC), diethyl carbonate (DEC), dimethyl carbonate, ethyl methyl carbonate (EMC), dimethyl carbonate, ethyl acetate, ethyl butyrate, acetonitrile, valeronitrile, succinonitrile, glutaronitrile, and the like.

In some embodiments, a mass percentage of solvents other than the ether solvent in the non-aqueous solvent is 1% to 20%.

In some embodiments, a conductivity of the electrolyte at -20°C is greater than or equal to 1 mS/cm.

According to the technical solution of the present invention, the electrolyte can maintain good conductivity under low-temperature conditions, thereby facilitating transport of sodium ions and improving the cycle performance of the battery under low-temperature conditions.

According to a second aspect, the present invention provides a sodium metal battery, including a positive electrode plate, a negative electrode plate, a separator, and the electrolyte described in the first aspect of the present invention.

In some embodiments, the negative electrode plate includes a negative electrode current collector and does not include sodium metal; after a first charge and discharge of the sodium metal battery, a sodium layer is deposited in situ on the negative electrode current collector.

According to a third aspect, the present invention provides an electrochemical apparatus, including the sodium metal battery described in the second aspect of the present invention.

Compared with the prior art, the beneficial effects of the technical solution of the present invention include:

The electrolyte provided by the present invention contains both ethylene glycol dimethyl ether and the ether compound represented by general formula I, and the two components exhibit different trends in sodium salt dissociation capability as temperature changes. Therefore, ethylene glycol dimethyl ether and the ether compound represented by general formula I complement each other and achieve the synergistic effect, ensuring that the electrolyte does not crystallize at low temperatures and maintains good sodium salt dissociation capability under both room temperature and low-temperature conditions, thereby enabling the electrolyte to maintain a high ionic conductivity and good cycle performance. On this basis, the electrolyte provided by the present invention further includes a first sodium salt and a second sodium salt. Since ethylene glycol dimethyl ether and the ether compound represented by general formula I exhibit different dissociation capabilities for different sodium salts under different temperature conditions, the simultaneous application of the first sodium salt and the second sodium salt further improves the sodium salt dissociation effect and conductivity of the electrolyte at low temperatures, thereby further improving the low-temperature performance of the battery.

### DESCRIPTION OF EMBODIMENTS

Exemplary embodiments of the present disclosure will be described in more detail below. It should be understood that the present disclosure may be implemented in various forms and should not be limited by the embodiments set forth herein. Rather, these embodiments are provided to enable a more thorough understanding of the present disclosure and to fully convey the scope of the present disclosure to those skilled in the art.

"Ranges" disclosed in the present invention are defined in the form of lower and upper limits. A given range is defined by one lower limit and one upper limit selected, where the selected lower and upper limits define boundaries of that special range. Ranges defined in this method may include the end values, and any combination may be used, meaning that any lower limit may be combined with any upper limit to form a range.

Unless otherwise specified, all the embodiments and optional embodiments of the present invention can be combined with each other to form new technical solutions.

Unless otherwise specified, all the technical features and optional technical features of the present invention can be combined with each other to form new technical solutions.

Unless otherwise specified, all steps in the present invention can be performed in the order described or in random order, preferably, in the order described. For example, a method including steps (a) and (b) indicates that the method may include steps (a) and (b) performed sequentially or may include steps (b) and (a) performed sequentially.

In the prior art, when sodium metal batteries are used under low-temperature conditions, sodium metal batteries still exhibit poor cycle performance, which affects the application of the sodium metal batteries under low-temperature conditions.

During the research process of the present invention, it is found that under low-temperature conditions, the solvents in electrolytes of the prior art have insufficient sodium salt dissociation capability, leading to reduced conductivity of the electrolyte, slower transport rate of sodium ions. This results in increased polarization of a battery, and easily leads to uneven sodium ion deposition, resulting in issues such as sodium dendrite formation, thereby affecting the low-temperature cycle performance of the battery. Therefore, the present invention primarily improves the cycle performance of sodium metal batteries at low temperatures by enhancing the transport rate of sodium ions of the electrolyte at low temperatures.

The present invention provides an electrolyte, including a non-aqueous solvent and a sodium salt dissolved in the non-aqueous solvent; the non-aqueous solvent includes an ether solvent, where the ether solvent includes ethylene glycol dimethyl ether and one or more compounds represented by general formula I:

R1-(O-R3)ₙ-O-R2 (general formula I);

where R1 and R2 are each independently selected from a linear or branched alkyl group having 1 to 6 carbon atoms, R3 is selected from a linear or branched alkylene group having 1 to 5 carbon atoms, and n is an integer from 2 to 5; or,
R1 and R2 are each independently selected from a linear or branched alkyl group having 2 to 6 carbon atoms, R3 is selected from a linear or branched alkylene group having 1 to 5 carbon atoms, and n is 1; and
a mass percentage of ethylene glycol dimethyl ether in the non-aqueous solvent is 5% to 50%.

During the research process of the present invention, it is found that ethylene glycol dimethyl ether exhibits strong sodium salt dissociation capability under room temperature conditions (approximately 20°C to 35°C), but the sodium salt dissociation capability thereof deteriorates under low-temperature conditions (for example, below approximately 0°C). For example, an electrolyte composed of ethylene glycol dimethyl ether and a sodium salt may achieve an ionic conductivity of 12 S/cm at 25°C, however, the electrolyte crystallizes below 0°C, and the conductivity also drops sharply. The ether solvent represented by general formula I has lower sodium salt dissociation capability than ethylene glycol dimethyl ether at room temperature, but the ether solvent maintains a certain sodium salt dissociation capability under low-temperature conditions. For example, an electrolyte composed of ethylene glycol diethyl ether and a sodium salt has an ionic conductivity of only 2.46 S/cm at 25°C, but it does not crystallize at -20°C, achieving a conductivity of 0.98 S/cm. By combining ethylene glycol dimethyl ether with the ether solvent represented by general formula I, the synergistic effect is achieved by the two. This can prevent crystallization of the electrolyte under low-temperature conditions and maintain good sodium salt dissociation effects, thereby enabling the sodium metal battery to exhibit superior performance under both room temperature and low-temperature conditions.

Furthermore, during research of the present invention, it is found that the mass percentage of ethylene glycol dimethyl ether in a total mass of the non-aqueous solvent must be within the range of 5% to 50%. If the mass percentage of ethylene glycol dimethyl ether is below 5%, it cannot provide sufficient sodium salt dissociation; and if the mass percentage of ethylene glycol dimethyl ether is above 50%, the electrolyte is prone to crystallization under low-temperature conditions, resulting in a sharp decline in battery performance.

In some embodiments, the mass percentage of ethylene glycol dimethyl ether in the non-aqueous solvent is approximately 5%, 7.5%, 10%, 12.5%, 15%, 17.5%, 20%, 22.5%, 25%, 27.5%, 30%, 32.5%, 35%, 37.5%, 40%, 42.5%, 45%, 47.5%, or 50%.

In some embodiments, a mass ratio of ethylene glycol dimethyl ether to the compound represented by general formula I is (5 to 50):(50 to 95).

When the mass ratio of ethylene glycol dimethyl ether to the compound represented by general formula I is within the above range, the two components can better exert synergistic effect, thereby achieving excellent technical effects. When the above mass ratio is employed, the sodium metal battery can still maintain good cycle performance even at temperatures as low as -20°C.

In some embodiments, the mass ratio of ethylene glycol dimethyl ether to the compound represented by general formula I is (5 to 10):(90 to 95), (10 to 15):(85 to 90), (15 to 20):(80 to 85), (20 to 25):(75 to 80), (25 to 30):(70 to 75), (30 to 35):(65 to 70), (35 to 40):(60 to 65), (40 to 45):(55 to 60), or (45 to 50):(50 to 55).

In some embodiments, the mass ratio of ethylene glycol dimethyl ether to the compound represented by general formula I is 5:95, 12.5:87.5, 20:80, 35:65, or 50:50.

In some embodiments, the mass percentage of the compound represented by general formula I in the non-aqueous solvent is approximately 50%, 52.5%, 55%, 57.5%, 60%, 62.5%, 65%, 67.5%, 70%, 72.5%, 75%, 77.5%, 80%, 82.5%, 85%, 87.5%, 90%, 92.5%, or 95%.

In some embodiments, in general formula I, R1 and R2 are each independently selected from methyl or ethyl, R3 is selected from a linear C1 to C5 alkylene group, and n is an integer from 2 to 5; or,
R1 and R2 are ethyl, R3 is selected from a linear C1 to C5 alkylene group, and n is 1.

In some embodiments, in general formula I, R1 and R2 are each independently selected from a linear or branched alkyl group having 1 to 6 carbon atoms, R3 is -CH₂CH₂-, and n is an integer from 2 to 5; or,
R1 and R2 are each independently selected from a linear or branched alkyl group having 2 to 6 carbon atoms, R3 is -CH₂CH₂-, and n is 1.

In some embodiments, the compound represented by general formula I include one or a combination of two or more of the following:
R1 and R2 are methyl, R3 is -CH₂CH₂-, and n is selected from 2, 3, 4, or 5 (for example, diethylene glycol dimethyl ether, triethylene glycol dimethyl ether, tetraethylene glycol dimethyl ether, pentaethylene glycol dimethyl ether, or the like); and
R1 and R2 are each independently selected from ethyl, propyl, 1-methylethyl, butyl, 2-methylpropyl, 1-methylpropyl, or 1,1-dimethylethyl, R3 is -CH₂CH₂-, and n is selected from 1, 2, 3, 4, or 5 (for example, ethylene glycol diethyl ether, diethylene glycol diethyl ether, triethylene glycol diethyl ether, tetraethylene glycol diethyl ether, pentaethylene glycol diethyl ether, ethylene glycol dibutyl ether, or the like).

In some embodiments, a plurality of compounds represented by general formula I may be polyethylene glycol dimethyl ether, and a molecular weight of the polyethylene glycol dimethyl ether is 200 to 320.

In the present specification, the term "polyethylene glycol dimethyl ether" refers to a mixed system of homologs with different molecular weights. In some embodiments, polyethylene glycol dimethyl ether with an average molecular weight of 200 to 320 may be used. For example, the average molecular weight of polyethylene glycol dimethyl ether may be 200, 220, 250, 280, 300, or 320, or the like.

In some embodiments, the sodium salt includes a first sodium salt, and the first sodium salt is sodium hexafluorophosphate.

In some embodiments, a concentration of sodium hexafluorophosphate in the electrolyte is 0.5 to 1.5 mol/L. For example, the concentration may be 0.5 mol/L, 0.6 mol/L, 0.7 mol/L, 0.8 mol/L, 0.9 mol/L, 1.0 mol/L, 1.1 mol/L, 1.2 mol/L, 1.3 mol/L, 1.4 mol/L, 1.5 mol/L, or the like.

The sodium salt in the present invention dissociates in the electrolyte to provide sodium ions, and the sodium salt includes sodium hexafluorophosphate, with a preferred concentration in the electrolyte of 0.5 to 1.5 mol/L. If the concentration is below 0.5 mol/L, this results in low concentration of dissociated sodium ions in the electrolyte, leading to a decrease in the conductivity of sodium ions; if the concentration is above 1.5 mol/L, the viscosity of the electrolyte increases, increasing the resistance to sodium ion conduction, which similarly results in a deterioration in the low-temperature performance of the sodium metal battery.

In some embodiments, the sodium salt includes sodium hexafluorophosphate and a second sodium salt, and the second sodium salt includes one or a combination of two or more of the following: sodium bis(fluorosulfonyl)imide (NaFSI), sodium bis(trifluoromethanesulfonyl)imide (NaTFSI), sodium difluoro(oxalato)borate, sodium tetrafluoroborate, sodium borohydride, sodium perchlorate, sodium bis(oxalato)borate, sodium trifluoromethanesulfonate.

During the research process of the present invention, it is found that under different temperature conditions, ethylene glycol dimethyl ether and the ether solvent represented by general formula I exhibit varying dissociation capabilities for different sodium salts. Under room temperature conditions, the dissociation capability of ethylene glycol dimethyl ether for the first sodium salt is superior to the dissociation capability of the ether reagent represented by general formula I. Under low-temperature conditions, the dissociation capability of ethylene glycol dimethyl ether for the first sodium salt significantly decreases, while the dissociation capability of the ether reagent represented by general formula I for the first sodium salt is superior to the dissociation capability of ethylene glycol dimethyl ether. Additionally, under low-temperature conditions, the dissociation capabilities of both ethylene glycol dimethyl ether and the ether solvent represented by general formula I for the second sodium salt are superior to their respective dissociation capabilities for the first sodium salt. Therefore, by simultaneously applying the first sodium salt and the second sodium salt, the electrolyte can exhibit superior sodium salt dissociation effects under both room temperature and low-temperature conditions, thereby maintaining good conductivity and further improving the low-temperature performance of the battery.

In some embodiments, a concentration of the second sodium salt in the electrolyte is 0.05 to 0.8 mol/L. For example, the concentration may be 0.05 mol/L, 0.1 mol/L, 0.2 mol/L, 0.3 mol/L, 0.4 mol/L, 0.5 mol/L, 0.6 mol/L, 0.7 mol/L, 0.8 mol/L, or the like.

According to the technical solution of the present invention, the electrolyte may consist of the simplest components, for example, the electrolyte may consist only of ethylene glycol dimethyl ether, the compound represented by general formula I, and the sodium salt. However, the scope of protection of the present invention does not exclude technical solutions containing other solvents or additives, as the addition of such solvents or additives may further impart corresponding performance to the battery.

In some embodiments, the electrolyte consists of the non-aqueous solvent and the sodium salt dissolved in the non-aqueous solvent.

In some embodiments, the non-aqueous solvent is an organic solvent.

In some embodiments, the non-aqueous solvent is an ether solvent.

In some embodiments, the ether solvent consists of ethylene glycol dimethyl ether and the ether compound represented by general formula I.

In some embodiments, the non-aqueous solvent further includes one or a combination of two or more of the following: a carboxylic acid ester solvent, a carbonate solvent, a sulfate ester solvent, a nitrile solvent, and a ketone solvent. For example, the non-aqueous solvent further includes one or a combination of two or more of the following: ethylene carbonate (EC), propylene carbonate (PC), diethyl carbonate (DEC), dimethyl carbonate, ethyl methyl carbonate (EMC), dimethyl carbonate, ethyl acetate, ethyl butyrate, acetonitrile, valeronitrile, succinonitrile, glutaronitrile, and the like.

In some embodiments, a mass percentage of solvents other than the ether solvent in the non-aqueous solvent is 1% to 20%. For example, the mass percentage may be 1%, 2%, 3%, 4%, 5%, 6%, 7%, 8%, 9%, 10%, 11%, 12%, 13%, 14%, 15%, 16%, 17%, 18%, 19%, 20%, or the like.

In some embodiments, the electrolyte further includes an additive to impart additional performance to the battery. For example, the additive may include a negative electrode film-forming additive, a positive electrode film-forming additive, or an additive capable of improving certain performance of the battery, for example, an additive for improving overcharge performance of the battery.

In some embodiments, a mass ratio of the additive to the non-aqueous solvent is (0.1 to 1):(50 to 200). For example, the mass ratio may be (0.1 to 1):(50 to 100), (0.1 to 1):(100 to 200), or the like.

In some embodiments, a conductivity of the electrolyte at -20°C is greater than or equal to 1 mS/cm.

According to the technical solution of the present invention, the electrolyte can maintain good conductivity under low-temperature conditions, thereby facilitating transport of sodium ions and improving the cycle performance of the battery under low-temperature conditions.

In some embodiments, the present invention provides a preparation method for the electrolyte, which is a common method used by those skilled in the art, namely, uniformly mixing the components (including the sodium salt, the non-aqueous solvent, with or without other additives), with no special limitations in the present invention.

In some embodiments, the present invention provides a sodium metal battery, including a positive electrode plate, a negative electrode plate, a separator, and the electrolyte described in the first aspect of the present invention.

In some embodiments, the sodium metal battery is an anode-free sodium metal battery, and the negative electrode plate includes a negative electrode current collector and does not include sodium metal; after a first charge and discharge of the sodium metal battery, a sodium layer is deposited in situ on the negative electrode current collector.

In the present specification, the term "anode-free sodium metal battery" refers to a sodium metal battery in which no negative electrode active material is added during the production process, and only the negative electrode current collector is used as the nominal negative electrode. After the first charge of the anode-free sodium metal battery is completed, the sodium metal in the positive electrode material migrates to a surface of the negative electrode current collector; a portion of the sodium metal remains on the negative electrode current collector, thereby forming a sodium deposition layer of a certain thickness, which constitutes the substantial negative electrode.

By applying the technical solution of the present invention, the infiltration effect of the electrolyte with the negative electrode of the anode-free sodium metal battery can be improved, reducing the interfacial impedance between the electrolyte and a negative electrode, thereby further enhancing the low-temperature cycle performance of the anode-free sodium metal battery.

### [Positive electrode plate]

The positive electrode plate includes a positive electrode current collector and a positive electrode material disposed on at least one surface of the positive electrode current collector, and the positive electrode material includes a positive electrode active material.

In some embodiments, the positive electrode current collector may be a metal foil current collector or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material includes at least one of sodium transition metal oxide, polyanionic compound, and Prussian blue compound. In the sodium transition metal oxide, the transition metal may be one or more of Mn, Fe, Ni, Co, Cr, Cu, Ti, Zn, V, Zr, and Ce, and the sodium transition metal oxide may be, for example, NaₓMO₂, where M is one or more of Ti, V, Mn, Co, Ni, Fe, Cr, and Cu, and 0 < x ≤ 1. Specifically, the sodium transition metal oxide may be selected from, but not limited to, sodium iron composite oxide (NaFeO₂), sodium cobalt composite oxide (NaCoO₂), sodium chromium composite oxide (NaCrO₂), sodium manganese composite oxide (NaMnO₂), sodium nickel composite oxide (NaNiO₂), sodium nickel titanium composite oxide (NaNi_{1/2}Ti_{1/2}O₂), sodium nickel manganese composite oxide (NaNi_{1/2}Mn_{1/2}O₂), sodium iron manganese composite oxide (Na_{2/3}Fe_{1/3}Mn_{2/3}O₂), sodium nickel cobalt manganese composite oxide (NaNi_{1/3}Co_{1/3}Mn_{1/3}O₂). The polyanionic compound includes one or more of sodium vanadium trifluorophosphate (Na₃V₂(PO₄)₂F₃), sodium vanadium fluorophosphate (NaVPO₄F), sodium vanadium phosphate (Na₃V₂(PO₄)₃), Na₄Fe₃(PO₄)₂P₂O₇, NaFePO₄, and Na₃V₂(PO₄)₃. The Prussian blue compound is NaₓM¹M²(CN)₆, where M¹ and M² are one or more of Fe, Mn, Co, Ni, Cu, Zn, Cr, Ti, V, Zr, Ce, and 0 < x ≤ 2.

In some embodiments, the positive electrode material may further optionally include a binder. For example, the binder may include one or a combination of two or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorine-containing acrylic resin, polyacrylic acid (PAA), polyvinyl alcohol (PVA), and styrene-butadiene rubber (SBR).

In some embodiments, the positive electrode material may further optionally include a conductive agent. For example, the conductive agent may include one or a combination of two or more of the following: Super P, acetylene black, carbon black, Ketjen black, carbon dots, carbon nanotubes, graphene, and carbon nanofibers.

In some embodiments, the positive electrode plate may be prepared by the following manner: The above positive electrode material, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

In some embodiments, the sodium metal battery is an anode-free sodium metal battery, and the negative electrode plate includes a negative electrode current collector and does not contain an active material; after a first charge and discharge of the battery is completed, a sodium layer is deposited in situ on the negative electrode current collector.

In some embodiments, the negative electrode plate of the anode-free sodium metal battery may further optionally include a conductive agent, and the conductive agent is disposed on at least a portion of a surface of the negative electrode current collector. By providing a conductive agent on the surface of the negative electrode current collector, the active sites on the surface of the negative electrode plate can be increased, reducing the overpotential required for sodium deposition and facilitating uniform sodium deposition on the surface of the negative electrode plate. For example, the conductive agent may include one or a combination of two or more of the following: Super P, acetylene black, carbon black, Ketjen black, carbon dots, carbon nanotubes, graphene, and carbon nanofibers.

In some embodiments, the negative electrode plate of the anode-free sodium metal battery may further optionally include other additives. For example, the other additives may include a thickener (for example, sodium carboxymethyl cellulose (CMC-Na)).

In some embodiments, the negative electrode plate may be prepared by the following manner: The negative electrode current collector is directly used as the negative electrode plate; or a slurry containing a conductive agent is applied onto the negative electrode current collector, followed by drying and other processes to obtain the negative electrode plate.

### [Electrolyte]

The electrolyte described in the present invention is used.

### [Separator]

The separator is not limited to a particular type in the present invention, and may be any well-known porous separator with good chemical stability and mechanical stability. For example, a material of the separator may be selected from one or a combination of two or more of the following: glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

### [Preparation of battery]

In some embodiments, the positive electrode plate, the negative electrode plate, and the separator may be made into an electrode assembly through winding or lamination.

In some embodiments, the sodium metal battery may include an outer package. The outer package may be used for packaging the electrode assembly and the electrolyte.

In some embodiments, the present invention provides an electrochemical apparatus, including the sodium metal battery of the present invention. The electrochemical apparatus may be any device in which an electrochemical reaction occurs. The electrochemical apparatus of the present invention is not particularly limited to any purpose, and may be used in, for example, a mobile phone, a tablet computer, a notebook computer, an electronic book player, a portable telephone, a portable fax machine, a portable copier, a headset, a video recorder, a television, a calculator, a storage card, a tape recorder, a standby power source, an automobile, a motorcycle, a motor bicycle, a lighting appliance, a toy, a game console, a clock, an electric tool, a camera, and the like.

### Example 1

### 1) Preparation of positive electrode plate

A 10 wt% polyvinylidene fluoride binder was fully dissolved in N-methylpyrrolidone, a 10 wt% carbon black conductive agent and an 80 wt% positive electrode active material Na₄Fe₃(PO₄)₂P₂O₇ were added, and the mixture was uniformly dispersed to prepare a positive electrode slurry. The positive electrode slurry was uniformly applied onto a surface of a positive electrode current collector aluminum foil, followed by drying, cold pressing, slitting, and cutting to obtain a positive electrode plate.

### 2) Preparation of negative electrode plate

5 g of sodium carboxymethyl cellulose (CMC-Na) was weighed and dissolved in 1000 mL of water with stirring, 5 g of single-walled carbon nanotubes was added, and the mixture was ultrasonically dispersed to prepare a slurry. The slurry was applied onto a surface of a negative electrode current collector copper foil, followed by drying, slitting, and cutting to obtain a negative electrode plate.

### 3) Preparation of electrolyte

In an argon atmosphere glove box (H₂O < 0.1 ppm, O₂ < 0.1 ppm), ethylene glycol dimethyl ether and ethylene glycol diethyl ether were mixed uniformly to prepare an electrolyte solvent, where a content of ethylene glycol dimethyl ether was 5 wt%, and a content of ethylene glycol diethyl ether was 95 wt%. Sodium hexafluorophosphate and sodium bis(fluorosulfonyl)imide (NaFSI) were added to the electrolyte solvent, followed by uniform stirring to prepare an electrolyte. In the electrolyte, a concentration of sodium hexafluorophosphate was 1 mol/L, and a concentration of NaF SI was 0.1 mol/L.

### 4) Separator

A polypropylene film was used as a separator.

### 5) Preparation of battery

The positive electrode plate, the separator, and the negative electrode plate were sequentially stacked, so that the separator was located between the positive electrode plate and the negative electrode plate for separation, followed by the addition of the above electrolyte to assemble a laminated battery, thereby preparing a sodium metal battery I-1.

### Example 2

The preparation was performed in the same manner as in Example 1, except for the following parameters, to obtain a sodium metal battery I-2.

In the electrolyte solvent, the content of ethylene glycol dimethyl ether was 12.5 wt%, and the content of ethylene glycol diethyl ether was 87.5 wt%.

### Example 3

The preparation was performed in the same manner as in Example 1, except for the following parameters, to obtain a sodium metal battery I-3.

In the electrolyte solvent, the content of ethylene glycol dimethyl ether was 20 wt%, and the content of ethylene glycol diethyl ether was 80 wt%.

### Example 4

The preparation was performed in the same manner as in Example 1, except for the following parameters, to obtain a sodium metal battery I-4.

In the electrolyte solvent, the content of ethylene glycol dimethyl ether was 35 wt%, and the content of ethylene glycol diethyl ether was 65 wt%.

### Example 5

The preparation was performed in the same manner as in Example 1, except for the following parameters, to obtain a sodium metal battery I-5.

In the electrolyte solvent, the content of ethylene glycol dimethyl ether was 50 wt%, and the content of ethylene glycol diethyl ether was 50 wt%.

### Example 6

The preparation was performed in the same manner as in Example 1, except for the following parameters, to obtain a sodium metal battery I-6.

In the electrolyte solvent, the content of ethylene glycol dimethyl ether was 20 wt%, and the content of ethylene glycol diethyl ether was 80 wt%; and in the electrolyte, the concentration of sodium hexafluorophosphate was 0.5 mol/L.

### Example 7

The preparation was performed in the same manner as in Example 1, except for the following parameters, to obtain a sodium metal battery I-7.

In the electrolyte solvent, the content of ethylene glycol dimethyl ether was 20 wt%, and the content of ethylene glycol diethyl ether was 80 wt%; and in the electrolyte, the concentration of sodium hexafluorophosphate was 0.8 mol/L.

### Example 8

The preparation was performed in the same manner as in Example 1, except for the following parameters, to obtain a sodium metal battery I-8.

In the electrolyte solvent, the content of ethylene glycol dimethyl ether was 20 wt%, and the content of ethylene glycol diethyl ether was 80 wt%; and in the electrolyte, the concentration of sodium hexafluorophosphate was 1.2 mol/L.

### Example 9

The preparation was performed in the same manner as in Example 1, except for the following parameters, to obtain a sodium metal battery I-9.

In the electrolyte solvent, the content of ethylene glycol dimethyl ether was 20 wt%, and the content of ethylene glycol diethyl ether was 80 wt%; and in the electrolyte, the concentration of sodium hexafluorophosphate was 1.5 mol/L.

### Example 10

The preparation was performed in the same manner as in Example 1, except for the following parameters, to obtain a sodium metal battery I-10.

In the electrolyte solvent, the content of ethylene glycol dimethyl ether was 20 wt%, and the content of ethylene glycol diethyl ether was 80 wt%; and in the electrolyte, the concentration of NaFSI was 0.05 mol/L.

### Example 11

The preparation was performed in the same manner as in Example 1, except for the following parameters, to obtain a sodium metal battery I-11.

In the electrolyte solvent, the content of ethylene glycol dimethyl ether was 20 wt%, and the content of ethylene glycol diethyl ether was 80 wt%; and in the electrolyte, the concentration of NaFSI was 0.3 mol/L.

### Example 12

The preparation was performed in the same manner as in Example 1, except for the following parameters, to obtain a sodium metal battery I-12.

In the electrolyte solvent, the content of ethylene glycol dimethyl ether was 20 wt%, and the content of ethylene glycol diethyl ether was 80 wt%; and in the electrolyte, the concentration of NaFSI was 0.8 mol/L.

### Example 13

The preparation was performed in the same manner as in Example 1, except for the following parameters, to obtain a sodium metal battery I-13.

In the electrolyte solvent, the content of ethylene glycol dimethyl ether was 20 wt%, and the content of ethylene glycol diethyl ether was 80 wt%. NaFSI is replaced with sodium bis(trifluoromethanesulfonyl)imide (NaTFSI), and a concentration of NaTFSI in the electrolyte was 0.1 mol/L.

### Example 14

The preparation was performed in the same manner as in Example 1, except for the following parameters, to obtain a sodium metal battery I-14.

In the electrolyte solvent, the content of ethylene glycol dimethyl ether was 20 wt%, and the content of ethylene glycol diethyl ether was 80 wt%. NaFSI is replaced with sodium difluoro(oxalato)borate (NaDFOB), and a concentration of NaDFOB in the electrolyte was 0.1 mol/L.

### Example 15

The preparation was performed in the same manner as in Example 1, except for the following parameters, to obtain a sodium metal battery I-15.

In the electrolyte solvent, the content of ethylene glycol dimethyl ether was 20 wt%, and the content of ethylene glycol diethyl ether was 80 wt%. NaFSI is replaced with sodium tetrafluoroborate (NaBF₄), and a concentration of NaBF₄ in the electrolyte was 0.1 mol/L.

### Example 16

The preparation was performed in the same manner as in Example 1, except for the following parameters, to obtain a sodium metal battery I-16.

Ethylene glycol diethyl ether is replaced with diethylene glycol dimethyl ether, and in the electrolyte solvent, the content of ethylene glycol dimethyl ether was 20 wt%, and the content of diethylene glycol diethyl ether was 80 wt%.

### Example 17

The preparation was performed in the same manner as in Example 1, except for the following parameters, to obtain a sodium metal battery I-17.

Ethylene glycol diethyl ether is replaced with triethylene glycol dimethyl ether, and in the electrolyte solvent, the content of ethylene glycol dimethyl ether was 20 wt%, and a content of triethylene glycol dimethyl ether was 80 wt%.

### Example 18

The preparation was performed in the same manner as in Example 1, except for the following parameters, to obtain a sodium metal battery I-18.

Ethylene glycol diethyl ether is replaced with tetraethylene glycol dimethyl ether, and in the electrolyte solvent, the content of ethylene glycol dimethyl ether was 20 wt%, and a content of tetraethylene glycol dimethyl ether was 80 wt%.

### Example 19

The preparation was performed in the same manner as in Example 1, except for the following parameters, to obtain a sodium metal battery I-19.

Ethylene glycol diethyl ether is replaced with polyethylene glycol dimethyl ether (a molecular weight of 250), and in the electrolyte solvent, the content of ethylene glycol dimethyl ether was 20 wt%, and a content of polyethylene glycol dimethyl ether was 80 wt%.

### Example 20

The preparation was performed in the same manner as in Example 1, except for the following parameters, to obtain a sodium metal battery I-20.

In the electrolyte solvent, the content of ethylene glycol dimethyl ether was 20 wt%, and the content of ethylene glycol diethyl ether was 80 wt%. In the electrolyte, the concentration of sodium hexafluorophosphate was 0.3 mol/L.

### Example 21

The preparation was performed in the same manner as in Example 1, except for the following parameters, to obtain a sodium metal battery I-21.

In the electrolyte solvent, the content of ethylene glycol dimethyl ether was 20 wt%, and the content of ethylene glycol diethyl ether was 80 wt%. In the electrolyte, the concentration of sodium hexafluorophosphate was 1.7 mol/L.

### Example 22

The preparation was performed in the same manner as in Example 1, except for the following parameters, to obtain a sodium metal battery I-22.

In the electrolyte solvent, the content of ethylene glycol dimethyl ether was 20 wt%, and the content of ethylene glycol diethyl ether was 80 wt%. The electrolyte did not contain NaFSI.

### Example 23

The preparation was performed in the same manner as in Example 1, except for the following parameters, to obtain a sodium metal battery I-23.

In the electrolyte solvent, the content of ethylene glycol dimethyl ether was 20 wt%, and the content of ethylene glycol diethyl ether was 80 wt%. In the electrolyte, the concentration of NaFSI was 1 mol/L.

### Comparative Example 1

The preparation was performed in the same manner as in Example 1, except for the following parameters, to obtain a sodium metal battery II-1.

The electrolyte solvent did not contain ethylene glycol dimethyl ether.

### Comparative Example 2

The preparation was performed in the same manner as in Example 1, except for the following parameters, to obtain a sodium metal battery II-2.

In the electrolyte solvent, the content of ethylene glycol dimethyl ether was 60 wt%, and the content of ethylene glycol diethyl ether was 40 wt%.

### Comparative Example 3

The preparation was performed in the same manner as in Example 1, except for the following parameters, to obtain the sodium metal battery II-3.

The electrolyte solvent did not contain ethylene glycol diethyl ether.

### Experimental examples

The electrolytes and sodium metal batteries prepared in Examples 1 to 23 and Comparative Examples 1 to 3 are tested.

### 1) Ionic conductivity of electrolyte under low-temperature conditions

The conductivity of the electrolyte was tested in accordance with HG/T 4067-2015. Specifically, under a constant temperature of -20 ± 0.1°C and an alternating-current impedance of 1 kHz, the resistance of the electrolyte was measured using a conductivity meter to calculate the conductivity of the electrolyte.

### 2) Capacity retention rate of battery under low-temperature conditions

The sodium metal battery was charged to 3.7 V at a constant current of 0.2C at -20°C, charged at 3.7 V until the current drops to 0.05C, and then discharged to 2.5 V at a constant current of 0.2C to obtain a first-cycle discharge capacity (Cd1); this charge and discharge cycle was repeated until the nth cycle, and the discharge capacity after n cycles of the sodium metal battery was recorded as Cdn. The capacity retention rate of the sodium metal battery was calculated using the following formula: Capacity retention rate = discharge capacity (Cdn) after n cycles/first-cycle discharge capacity (Cd1).

The results of the above tests are shown in Table 1:

**Table 1**

| | At -20°C, ionic conductivity (S/cm) | At -20°C, capacity retention rate after 50 cycles (%) |
|---|---|---|
| Example 1 | 1.14 | 87.3 |
| Example 2 | 1.72 | 92.6 |
| Example 3 | 2.00 | 95.5 |
| Example 4 | 1.34 | 95.2 |
| Example 5 | 1.07 | 89.3 |
| Example 6 | 1.32 | 85.6 |
| Example 7 | 1.84 | 92.5 |
| Example 8 | 1.99 | 93.9 |
| Example 9 | 1.84 | 88.2 |
| Example 10 | 1.94 | 90.8 |
| Example 11 | 2.23 | 94.5 |
| Example 12 | 1.33 | 86.7 |
| Example 13 | 1.88 | 94.1 |
| Example 14 | 1.86 | 95.2 |
| Example 15 | 1.93 | 93.9 |
| Example 16 | To be tested | To be tested |
| Example 17 | To be tested | To be tested |
| Example 18 | To be tested | To be tested |
| Example 19 | To be tested | To be tested |
| Example 20 | 0.63 | 74.6 |
| Example 21 | 1.29 | 68.5 |
| Example 22 | 1.31 | 81.2 |
| Example 23 | 1.28 | 69.5 |
| Comparative | 0.98 | 56.6 |
| Example 1 | | |
| Comparative Example 2 | / | 5.6 |
| Comparative Example 3 | / | 0.1 |

Ionic conductivity is one of the main factors affecting the capacity retention rate of the battery. According to the experimental results, if the electrolyte solvent contains ethylene glycol dimethyl ether but does not contain the ether solvent represented by general formula I (Comparative Example 3), the electrolyte crystallizes under low-temperature conditions. At -20°C, the conductivity of the electrolyte in Comparative Example 3 cannot be measured due to exceeding the detection limit of the instrument, and the capacity retention rate of the battery is also significantly reduced. If the electrolyte solvent contains the ether solvent represented by general formula I but does not contain ethylene glycol dimethyl ether (Comparative Example 1), although the electrolyte does not crystallize under low-temperature conditions, the ionic conductivity is low, resulting in poor capacity retention rate of the battery. Additionally, when the electrolyte solvent contains both ethylene glycol dimethyl ether and ethylene glycol diethyl ether, if the content of ethylene glycol dimethyl ether is too high (Comparative Example 2), the electrolyte also crystallizes under low-temperature conditions, resulting in a significant reduction in the capacity retention rate of the battery.

According to the experimental results of the above examples, by applying the electrolyte provided by the present invention, ethylene glycol dimethyl ether and the compound represented by general formula I are used in a specific ratio, even at a temperature of -20°C, crystallization of the electrolyte at low temperatures can still be avoided, and good capacity retention rate can be achieved.

Furthermore, compared to using only the first sodium salt, sodium hexafluorophosphate (Example 22), the simultaneous application of the first sodium salt and the second sodium salt in the electrolyte provided by the present invention can further improve the capacity retention rate. However, if the content of the first sodium salt in the electrolyte is too high (Example 21) or the content of the second sodium salt is too high (Example 23), the viscosity of the electrolyte increases, increasing the resistance to sodium ion conduction, which is not conducive to the cycle performance of the battery. If the content of the first sodium salt in the electrolyte is too low (Example 20), this results in low concentration of dissociated sodium ions in the electrolyte, leading to a decrease in the conductivity of sodium ions.

The above descriptions are merely specific embodiments of the present invention but are not intended to limit the protection scope of the present invention. Any variation or replacement readily figured out by persons skilled in the art within the technical scope disclosed in the present invention shall fall within the protection scope of this invention. Therefore, the protection scope of the present invention shall be subject to the protection scope of the claims.

## Claims

1. An electrolyte, comprising a non-aqueous solvent and a sodium salt dissolved in the non-aqueous solvent, the non-aqueous solvent comprising an ether solvent, **characterized in that** the ether solvent comprises ethylene glycol dimethyl ether and one or more compounds represented by general formula I:
R1-(O-R3)ₙ-O-R2 (general formula I);
wherein R1 and R2 are each independently selected from a linear or branched alkyl group having 1 to 6 carbon atoms, R3 is selected from a linear or branched alkylene group having 1 to 5 carbon atoms, and n is an integer from 2 to 5; or,
R1 and R2 are each independently selected from a linear or branched alkyl group having 2 to 6 carbon atoms, R3 is selected from a linear or branched alkylene group having 1 to 5 carbon atoms, and n is 1; and
a mass percentage of ethylene glycol dimethyl ether in the non-aqueous solvent is 5% to 50%.

2. The electrolyte according to claim 1, **characterized in that** a mass ratio of ethylene glycol dimethyl ether to the compound represented by general formula I is (5 to 50):(50 to 95).

3. The electrolyte according to claim 1, **characterized in that** in general formula I, R1 and R2 are each independently selected from methyl or ethyl, R3 is selected from a linear C1 to C5 alkylene group, and n is an integer from 2 to 5; or,
R1 and R2 are ethyl, R3 is selected from a linear C1 to C5 alkylene group, and n is 1.

4. The electrolyte according to claim 1, **characterized in that** in general formula I, R1 and R2 are each independently selected from a linear or branched alkyl group having 1 to 6 carbon atoms, R3 is -CH₂CH₂-, and n is an integer from 2 to 5; or,
R1 and R2 are each independently selected from a linear or branched alkyl group having 2 to 6 carbon atoms, R3 is -CH₂CH₂-, and n is 1.

5. The electrolyte according to claim 1, **characterized in that** the compound represented by general formula I comprises one or a combination of two or more of the following: diethylene glycol dimethyl ether, triethylene glycol dimethyl ether, tetraethylene glycol dimethyl ether, pentaethylene glycol dimethyl ether, ethylene glycol diethyl ether, diethylene glycol diethyl ether, triethylene glycol diethyl ether, tetraethylene glycol diethyl ether, pentaethylene glycol diethyl ether, ethylene glycol dibutyl ether.

6. The electrolyte according to claim 1, **characterized in that** the ether solvent comprises ethylene glycol dimethyl ether and polyethylene glycol dimethyl ether, and a molecular weight of the polyethylene glycol dimethyl ether is 200 to 320.

7. The electrolyte according to claim 1, **characterized in that** the sodium salt comprises a first sodium salt, and the first sodium salt is sodium hexafluorophosphate.

8. The electrolyte according to claim 7, **characterized in that** a concentration of sodium hexafluorophosphate in the electrolyte is 0.5 to 1.5 mol/L.

9. The electrolyte according to claim 7 or 8, **characterized in that** the sodium salt further comprises a second sodium salt, and the second sodium salt comprises one or a combination of two or more of the following: sodium bis(fluorosulfonyl)imide, sodium bis(trifluoromethanesulfonyl)imide, sodium difluoro(oxalato)borate, sodium tetrafluoroborate, sodium borohydride, sodium perchlorate, sodium bis(oxalato)borate, sodium trifluoromethanesulfonate.

10. The electrolyte according to claim 9, **characterized in that** a concentration of the second sodium salt in the electrolyte is 0.05 to 0.8 mol/L.

11. The electrolyte according to claim 1, **characterized in that** the non-aqueous solvent further comprises one or a combination of two or more of the following: a carboxylic acid ester solvent, a carbonate solvent, a sulfate ester solvent, a nitrile solvent, and a ketone solvent.

12. The electrolyte according to claim 1, **characterized in that** a conductivity of the electrolyte at -20°C is greater than or equal to 1 mS/cm.

13. A sodium metal battery, **characterized by** comprising a positive electrode plate, a negative electrode plate, a separator, and the electrolyte according to any one of claims 1 to 12.

14. An electrochemical apparatus, **characterized by** comprising the sodium metal battery according to claim 13.
